# EUROPÄISCHE PATENTSCHRIFT

(11) **EP 1 019 675 B1**
(45) Veröffentlichungstag und Bekanntmachung des Hinweises auf die Patenterteilung: **27.02.2002**
(21) Anmeldenummer: 98958157.4
(22) Anmeldetag: 23.09.1998
(51) Int. Cl.: G01D 7/04, B60K 35/00

(54) **MESSWERK, INSBESONDERE FÜR ANZEIGEEINRICHTUNG IN DER KFZ-TECHNIK**
MEASURING UNIT, ESPECIALLY FOR A DISPLAY DEVICE USED IN AUTOMOBILE TECHNOLOGY
MECANISME DE MESURE, NOTAMMENT POUR DISPOSITIF INDICATEUR UTILISE DANS LA TECHNIQUE DE L'AUTOMOBILE

(30) Priorität: 02.10.1997 DE 19743783
(43) Veröffentlichungstag der Anmeldung: 19.07.2000
(73) Patentinhaber: TRW Automotive Electronics & Components GmbH & Co. KG, 78315 Radolfzell (DE)
(72) Erfinder: SAUTER, Roland, D-78045 Villingen-Schwenningen (DE)
(74) Vertreter: Eder, Thomas, Dr.-Ing.
(86) Internationale Anmeldenummer: DE9802828
(87) Internationale Veröffentlichungsnummer: WO9918413

(56) Entgegenhaltungen:
- DE-A- 2 719 389
- DE-A- 3 906 721
- DE-U- 9 003 892

## Beschreibung

Die Erfindung betrifft ein Messwerk, insbesondere für Anzeigeeinrichtungen in der KFZ-Technik.

In der KFZ-Technik finden für die Anzeige interessierender Parameter, beispielsweise der Fahrzeuggeschwindigkeit, der Motordrehzahl, des Füllgrads des Tanks oder dergleichen, häufig analoge Anzeigeinstrumente Verwendung. Bei derartigen Anzeigeinstrumenten wird ein mittels eines beliebigen Antriebs, beispielsweise mittels einer Drehspule oder eines Schrittmotors, bewegbarer Zeiger über eine entsprechende Skala bewegt, auf welcher der interessierende Wertebereich des anzuzeigenden Parameters aufgetragen ist.

Bei bekannten Anzeigeeinrichtungen wird für jede einzelne Anzeige bzw. für jeden einzelnen Parameter ein separates Messwerk verwendet, welches Anschlusskontakte für das Zuführen der den betreffenden Parametern entsprechenden Signale sowie einen in einem Gehäuse des Messwerks vorgesehenen Antrieb mit einer Abtriebswelle aufweist. Die Abtriebswelle ist mit dem zu bewegenden Zeiger verbindbar.

Messwerke für die Anzeige mehrerer Messsignale sind z.B. aus DE 90 03 892 U und DE 39 06 721 A bekannt.

Insbesondere bei Kombiinstlumenten ergibt sich daher häufig das Problem, die erforderliche Anzahl von Messwerken auf der Platine bzw. im Gehäuse des Kombiinstruments zu platzieren. Häufig wird gefordert, dass die Analoganzeigen so nahe benachbart sind, dass mit üblichen Mitteln die Messwerke infolge der Ausdehnung der Messwerkgehäuse nicht in der gewünschten Weise platzierbar sind.

Der Erfindung liegt daher die Aufgabe zugrunde, ein Messwerk, insbesondere für Anzeigeeinrichtungen in der KFZ-Technik, zu schaffen, welches die Darstellung wenigstens zweier Parameter ermöglicht und welches bei möglichst geringer Baugröße mit geringem Aufwand realisierbar ist.

Die Erfindung löst diese Aufgabe mit den Merkmalen des Patentanspruchs 1.

Die Erfindung geht von der Erkenntnis aus, dass durch die koaxiale Anordnung zweier Abtriebswellen zweier jeweils unabhängig ansteuerbarer Antriebe eine analoge Anzeige für wenigstens zwei Parameter mit äußerst geringem Platzbedarf, sowohl hinsichtlich der Anzeigeelemente bzw. der Skalen der Anzeige als auch hinsichtlich des Messwerks realisierbar ist.

Des Weiteren ermöglicht die koaxiale Anordnung der beiden Abtriebswellen die Anordnung zweier Zeiger bzw. beliebiger Anzeigeelemente ausgehend von einem einzigen Achspunkt, was in bestimmten Fällen vorteilhaft sein kann, beispielsweise bei der Darstellung zweier oder mehrerer Parameter auf einem einzigen Rundinstrument.

In der bevorzugten Ausführungsform der Erfindung ist für das Messwerk ein einziges Gehäuse vorgesehen, in welchem wenigstens ein erster und ein zweiter Antrieb angeordnet sind. Das Gehäuse besteht aus einem oberen und einem unteren Gehäuseteil.

Durch die im Wesentlichen identische Ausbildung der Antriebe ergibt sich der Vorteil eines geringen Herstellungsaufwands, da die Anzahl unterschiedlicher Teile reduziert wird.

Bei der bevorzugten Ausführungsform der Erfindung sind der erste und zweite Antrieb spiegelbildlich im Gehäuse angeordnet, wodurch eine äußerst flache Bauweise des Messwerks ermöglicht wird.

Die beiden Antriebe sind vorzugsweise über jeweils ein Zwischenritzel mit einem auf der betreffenden Abtriebswelle drehfest angeordneten Antriebsritzel verbunden. Hierdurch ergibt sich ein Getriebe für die Übertragung der Antriebsbewegungen auf die Abtriebswellen mit minimalem Aufwand.

In der bevorzugten Ausführungsform der Erfindung ist die als Hohlwelle ausgebildete Abtriebswelle einstückig mit dem ersten Antriebsritzel ausgebildet, beispielsweise als Kunststoffspritzteil.

Bei der bevorzugten Ausführungsform ist das zweite Antriebsritzel drehfest und auch in axialer Richtung fest mit der zweiten Abtriebswelle verbunden und das untere Ende der zweiten Abtriebswelle drehbar im Gehäuse gelagert. Des Weiteren ist eine Lagerbrücke vorgesehen, welche die zweite Abtriebswelle unmittelbar und/oder im Bereich eines Haltebunds des zweiten Antriebsritzels in einem zweiten Punkt drehbar lagert. Die Abtriebswelle kann in entsprechende Lagerstifte in der unteren Gehäusehälfte eingesteckt und mit diesen verrastet bzw. verpresst werden.

Die Haltebrücke ermöglicht somit eine einfache Montage und Lagerung der zweiten Abtriebswelle bzw. des zweiten Antriebsritzels.

Gleichzeitig kann die Haltebrücke so ausgebildet sein, dass diese gleichzeitig als axiale Fixierung des im Gehäuse drehbar gelagerten ersten Zwischenritzels dient. Hierzu kann das Zwischenritzel beispielsweise auf einem Lagerstift im Gehäuseboden aufgesteckt sein, wobei die Unterseite der Lagerbrücke die axiale Bewegung des Zwischenritzels beschränkt.

In der bevorzugten Ausführungsform der Erfindung dient die Lagerbrücke gleichzeitig als Lager für das erste Antriebsritzel, welches vorzugsweise auf eine auf der Lagerbrücke ausgebildeten Führungshülse aufsteckbar ist und mittels dieser drehbar gelagert wird. Die Führungshülse kann zudem mit Teilen ihrer Innenwandung gleichzeitig die sie durchgreifende zweite Abtriebswelle beaufschlagen und hierdurch eine zusätzliche Führung der zweiten Abtriebswelle gewährleisten.

Die Führungshülse der Lagerbrücke ist vorzugsweise so ausgebildet, dass sie in die als Hohlwelle ausgebildete erste Abtriebswelle eingreift und über einen ausreichend großen axialen Bereich eine stabile Lagerung der ersten Abtriebswelle bzw. des damit verbundenen ersten Antriebsritzels bewirkt.

Die erste Abtriebswelle kann zusätzlich drehbar in der Gehäuseoberseite gelagert sein, wobei hierfür in der Gehäuseoberseite vorzugsweise ein Zentrierbund vorgesehen ist, der gleichzeitig zur Fixierung des Messwerks in einem Montageteil dient.

Ein Gehäusedeckel kann gleichzeitig die axiale Fixierung des ersten Zwischenritzels bewirken, welches vorzugsweise auf einem Lagerstift in der unteren Gehäusehälfte aufgesteckt ist.

Auf diese Weise wird durch das Vorsehen einer Lagerbrücke, in Verbindung mit einem zweiteilig ausgebildeten Gehäuse, ein äußerst einfacher und platzsparender Aufbau des Messwerks, insbesondere eine äußerst flache Bauweise, gewährleistet.

Weitere Ausführungsformen der Erfindung ergeben sich aus den abhängigen Ausprüchen.

Die Erfindung wird nachfolgend anhand eines in der Zeichnung dargestellten Ausführungsbeispiels näher erläutert. In der Zeichnung zeigen:
- Fig. 1: eine perspektivische Darstellung eines Messwerks nach der Erfindung mit einem zweiteilig ausgebildeten Gehäuse bei geöffnetem Gehäusedeckel;
- Fig. 2: eine Draufsicht auf das Messwerk in Fig. 1;
- Fig. 3: einen Längsschnitt durch das Messwerk in den Fig. 1 und 2 in einer Ebene durch die Abtriebswellen und
- Fig. 4: eine schematische Darstellung eines Kombiinstruments für ein KFZ mit drei Messwerken nach den Fig. 1 bis 3.

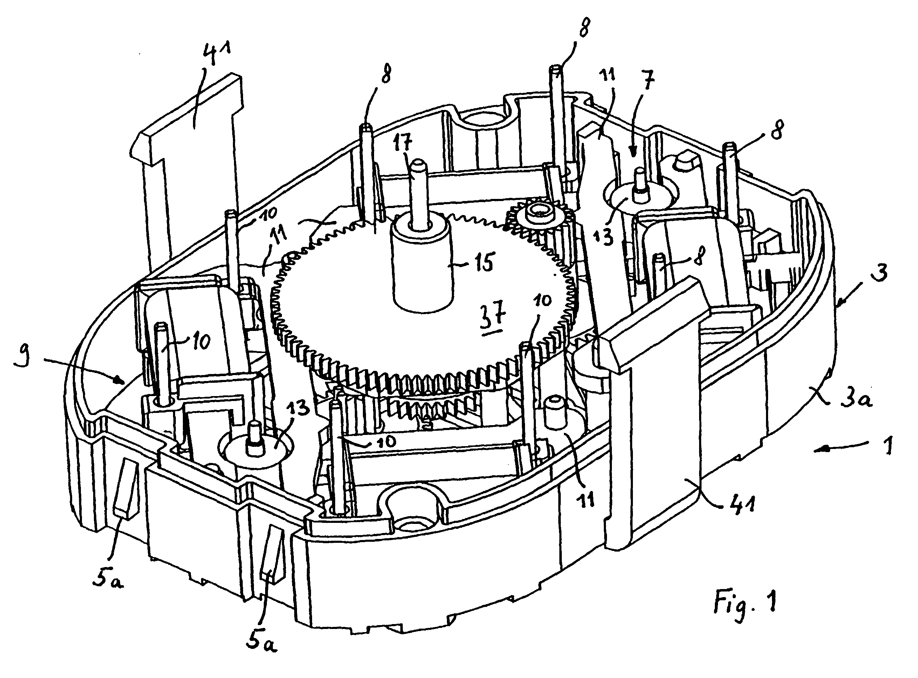

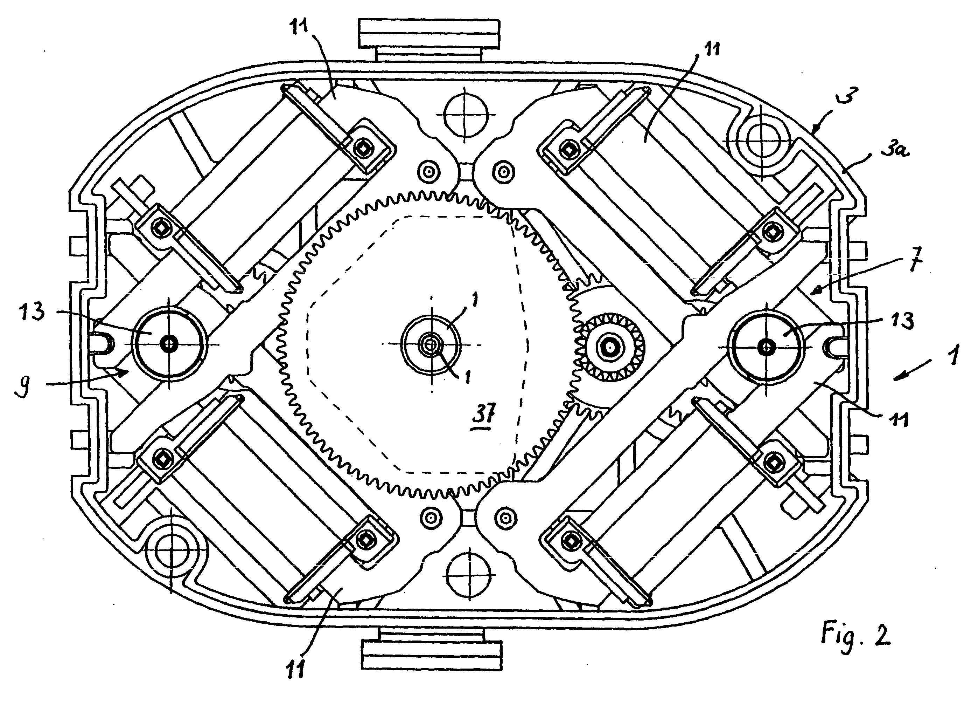

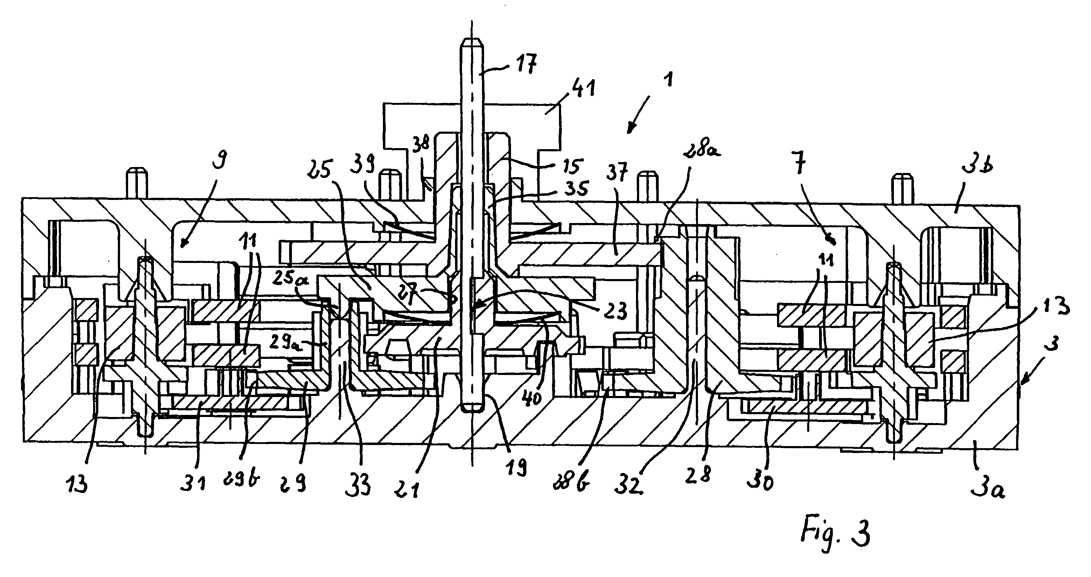

Wie aus den Fig. 1 und 2 ersichtlich, umfasst das dargestellte Ausführungsbeispiel eines erfindungsgemäßen Messwerks 1 ein Gehäuse 3, welches aus einem unteren Gehäuseteil 3a und einem oberen Gehäuseteil 3b (Fig. 3) besteht.

Das obere Gehäuseteil ist mit dem unteren Gehäuseteil mittels einer Rastverbindung 5 verbindbar, wobei, wie aus Fig. 1 ersichtlich, hierzu am unteren Gehäuseteil 3a Rastvorsprünge 5a vorgesehen sein können, welche mit am oberen Gehäuseteil 3b vorgesehenen Rastfedern zusammenwirken.

Im unteren Gehäuseteil 3a sind ein erster Antrieb 7 und ein zweiter Antrieb 9 angeordnet, welche als Schrittmotoren in an sich bekannter Bauart ausgebildet sein können.

Die beiden Antriebe 7, 9 sind im Wesentlichen identisch aufgebaut, so dass sich hierdurch eine Reduzierung der Anzahl unterschiedlicher Teile mit entsprechenden Vorteilen bei der Fertigung und Lagerhaltung ergibt. Jeder der Schrittmotoren 7, 9 umfasst zwei senkrecht zueinander verlaufende U-förmige Statoren 11, zwischen deren Schenkeln jeweils ein Rotor 13 angeordnet ist.

Durch die spiegelbildliche Anordnung der beiden Schrittmotoren 7, 9 beiderseits der annähernd zentral im Gehäuse vorgesehenen ersten bzw. zweiten Abtriebswelle 15, 17 ergibt sich ein äußerst raumgedrängter und gleichzeitig flacher Aufbau des Messwerks 1.

Diese äußerst kleine und flache Bauweise wird insbesondere dadurch gewährleistet, dass die beiden Abtriebswellen 15, 17 koaxial angeordnet sind, wobei die mit dem zweiten Antrieb bzw. Schrittmotor 9 verbundene zweite Abtriebswelle 17 die als Hohlwelle ausgebildete erste Abtriebswelle 15, welche mit dem ersten Antrieb 7 verbunden ist, koaxial durchgreift.

Die zweite Abtriebswelle 17 ist dabei mit ihrem unteren Ende in einer Lagerausnehmung 19 im Boden des unteren Gehäuseteils 3a gelagert. Die zweite Abtriebswelle 19 kann beispielsweise als Metallstift ausgebildet sein, an welchem, wie in Fig. 3 dargestellt, ein zweites Antriebsritzel 21 angespritzt ist. Um eine drehfeste und gleichzeitig in axialer Richtung feste Verbindung des angespritzten Antriebsritzels 21 auf der zweiten Abtriebswelle 19 zu gewährleisten, kann in einem entsprechenden Bereich der Abtriebswelle 19 eine Ausnehmung 23 vorgesehen sein, in welche der Körper des Antriebsritzels 21 eingreift. Auf die zweite Abtriebswelle 17 ist bei der dargestellten bevorzugten Auführungsform eine Lagerbrücke 25 aufgesteckt, in welcher eine Durchgangsöffnung 27 ausgebildet ist, durch welche die zweite Abtriebswelle 17 bzw. ein daran angespritzter Bund des zweiten Antriebsritzels 21 ragt. Hierdurch wird die Abtriebswelle 17 in einem zweiten Bereich geführt, so dass eine ausreichend stabile Führung der Abtriebswelle 17 gewährleistet werden kann.

Das zweite Antriebsritzel 21 wirkt mit einem zweiten Zwischenritzel 29 zusammen, welches über ein Abtriebsritzel 31 des zweiten Antriebs 9 angetrieben wird.

Das Zwischenritzel 29 weist eine obere Verzahnung 29a auf, welche mit der Verzahnung des Antriebsritzels 21 zusammenwirkt und eine untere Verzahnung 29b, welche in die Verzahnung des Abtriebsritzels 31 des zweiten Antriebs 9 eingreift. Das zweite Zwischenritzel 29 ist auf einem Lagerstift 33, welcher am Boden des unteren Gehäuseteils 3a vorgesehen ist, aufgesteckt. Die axiale Fixierung des zweiten Zwischenritzels 29 wird ebenfalls durch die Lagerbrücke 25 gewährleistet, wobei an der Unterseite der Lagerbrücke 25 ein Gegenlagerstift 25a vorgesehen ist, welcher in die zentrale Lagerbohrung des zweiten Zwischenritzels 29 in ihrem oberen Ende eingreift. Die axiale Höhe des Zwischenritzels 29, welche u.a. eine exakte Führung des Zwischenritzels gewährleistet, ist dabei so bemessen, dass diese mit einem vorbestimmten Überstand über das Ende des Lagerstifts 33 hinausragt. Die Länge des Gegenlagerstifts 25a an der Unterseite der Lagerbrücke 25 ist so bemessen, dass dieser das obere Ende des Lagerstifts 33 beaufschlagt, ohne dass dabei die Oberseite des Zwischenritzels 29 mit einer hohen Reibkraft beaufschlagt wird. Hierdurch wird eine freie Drehbarkeit des Zwischenritzels 29 bei einer exakten axialen Fixierung gewährleistet.

An der Oberseite der Lagerbrücke 25 ist eine Führungshülse 35 vorgesehen, welche zumindest mit einem Teilbereich ihrer Innenwandung zusätzlich die zweite Abtriebswelle 17 führen kann. Zudem dient die Führungshülse 35 als Lager für das erste Abtriebsritzel 37, welches im dargestellten Ausführungsbeispiel einstückig mit der ersten Abtriebswelle 15 verbunden ist. Diese beiden Elemente können beispielsweise als einstückiges Kunststoffspritzteil gefertigt sein.

Zusätzlich wird die erste Abtriebswelle 15 durch eine im oberen Gehäuseteil 3b vorgesehene Durchgangsöffnung geführt, wobei an der Oberseite des oberen Gehäuseteils 3b ein Fixierbund 38 vorgesehen sein kann, welcher eine verbesserte Führung der ersten Abtriebswelle 15 bewirkt und gleichzeitig als Fixierhilfe bei der Montage des Messwerks in bzw. an einem Montageteil, beispielsweise einer Leiterplatte, dienen kann.

Das erste Antriebsritzel 37 wird an seiner Oberseite mittels eines federnden Elements 39 beaufschlagt, welches sich an der Unterseite des oberen Gehäuseteils 3b abstützt. Hierdurch wird zusätzlich zu einer axialen Fixierung des Antriebsritzels 37 gleichzeitig eine gewünschte Bremswirkung erzeugt.

In gleicher Weise wird das zweite Antriebsritzel 21 an seiner Oberseite mittels eines weiteren federnden Elements beaufschlagt, welches sich an der Unterseite der Lagerbrücke 25 abstützt. Auch hier wird zusätzlich zu einer axialen Fixierung des zweiten Antriebsritzels 21 die gewünschte Bremswirkung erzielt.

Das erste Antriebsritzel 37 wirkt mit einem ersten Zwischenritzel 28 zusammen, welches von einem ersten Abtriebsritzel 30 des ersten Antriebs 7 angetrieben wird. Das erste Zwischenritzel 28 weist eine untere mit dem Abtriebsritzel des ersten Antriebs 7 zusammenwirkende Verzahnung 28b auf sowie eine obere Verzahnung 28a, die in die Verzahnung des ersten Antriebsritzels 37 eingreift.

Das erste Zwischenritzel 28 ist wiederum auf einem Lagerstift 32 gelagert, welcher am Boden des unteren Gehäuseteils 3a vorgesehen ist. In axialer Richtung wird das erste Zwischenritzel 28 durch einen an der Unterseite des oberen Gehäuseteils 3b vorgesehenen Gegenlagerstift fixiert, welcher in die Durchgangsöffnung des ersten Zwischenritzels eingreift und sich auf der Oberseite des Lagerstifts 32 abstützt. Die Längen des Lagerstifts 32 und des Gegenlagerstifts sind dabei wieder so bemessen, dass das Zwischenritzel 28 in axialer Richtung fixiert ist, ohne mit einer wesentlichen Bremskraft beaufschlagt zu werden.

Wie aus Fig. 1 ersichtlich, können die Anschlusskontakte 8 für den ersten Antrieb 7 bzw. 10 für den zweiten Antrieb 9 als Anschlussstifte ausgebildet sein, die durch das obere Gehäuseteil 3b herausgeführt sind. Hierdurch ergibt sich der Vorteil, dass das Messwerk 1 lediglich mit den Anschlusskontakten 8, 10 in entsprechende Kontaktierungsbohrungen in einem Montageteil, beispielsweise einer Leiterplatte, eingesetzt werden muss. Das Kontaktieren kann dabei in einfacher Weise durch Verlöten erfolgen.

Für die Halterung des Messwerks 1 im bzw. am Montageteil können, vorzugsweise am unteren Gehäuseteil 3a, Rastzungen 41 vorgesehen sein, welche in entsprechende Ausnehmungen im Montageteil eingreifen. Selbstverständlich kann jedoch das Messwerk 1 auch auf beliebige andere Weise mit dem Montageteil verbunden werden, beispielsweise durch Verschrauben durch das Aufsetzen auf Lagerstifte, die anschließend verpresst werden.

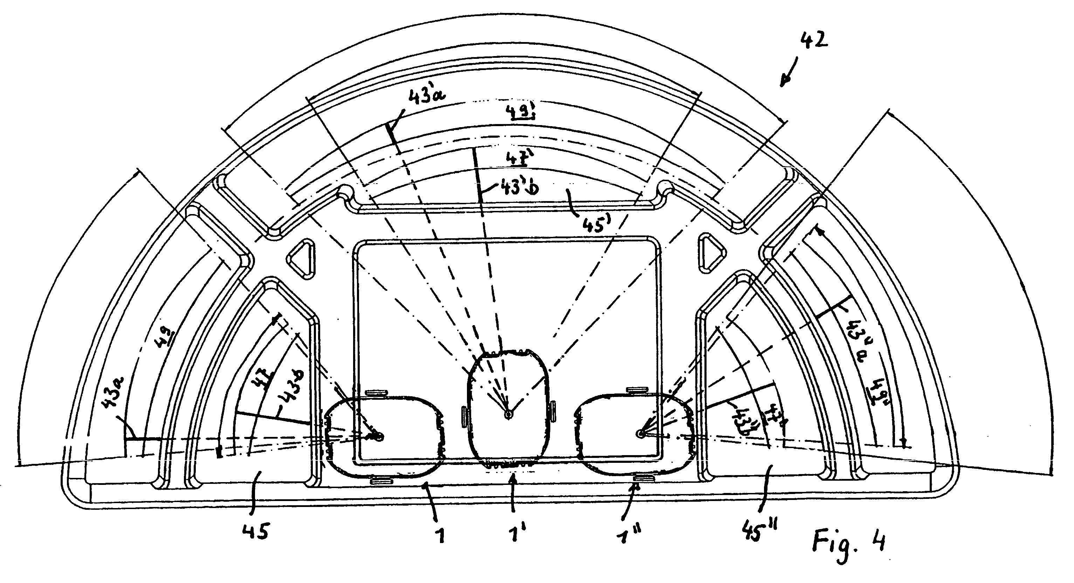

Zur Veranschaulichung eines Einsatzzwecks des in den Fig. 1 und 2 dargestellten Doppelmesswerks zeigt Fig. 4 eine schematische Darstellung eines Kombiinstruments für ein KFZ.

Das Kombiinstrument 42 umfasst insgesamt drei Messwerke 1, 1', 1" gemäß den Fig. 1 und 2.

Jedes der Doppelmesswerke 1, 1', 1" ist mit jeweils zwei Zeigern 43a, 43b, 43'a, 43'b bzw. 43"a, 43"b verbunden. Der jeweils längere der beiden Zeiger ist unter einer Blende 45, 45', 45" hindurchgeführt, auf welcher jeweils eine Skala 47, 47', 47" für den jeweils durch den kürzeren Zeiger 43b, 43'b, 43"b darzustellenden Parameter vorgesehen ist.

In gleicher Weise sind unterhalb der längeren Zeiger 43a, 43'a, 43"a Blenden mit entsprechenden Skalen 49, 49', 49" zur Darstellung des betreffenden Parameters vorgesehen.

Unter Verwendung der erfindungsgemäßen Doppelmesswerke 1, 1', 1" ergibt sich somit ein äußerst einfacher und raumsparender, insbesondere flacher Aufbau des Kombiinstruments 42.

## Patentansprüche

1. Messwerk, insbesondere für Anzeigeeinrichtungen in der KFZ-Technik,
a) mit einem Gehäuse (3),
b) in welchem ein erster (7) und zweiter (9) unabhängig ansteuerbarer Antrieb angeordnet ist, welche jeweils mittels eines ersten und zweiten Getriebes mit einer ersten (15) und zweiten (17) Abtriebswelle verbunden sind, die jeweils mit einem Anzeigeelement koppelbar sind,
c) wobei die zweite Abtriebswelle (17) koaxial durch die als Hohlwelle ausgebildete erste Abtriebswelle (15) geführt ist,
d) wobei das erste Getriebe ein drehfest mit der ersten Abtriebswelle (15) verbundenes Antriebsritzel (37) umfasst, welches mit dem ersten Antrieb (7) verbunden ist, und wobei das zweite Getriebe ein axial und drehfest mit der zweiten Abtriebswelle (17) verbundenes zweites Antriebsritzel (21) umfasst, welches mit dem zweiten Antrieb verbunden ist,
**dadurch gekennzeichnet**,
e) dass das Gehäuse (3) aus einem oberen (3b) und einem unteren (3a) Gehäuseteil besteht,
f) wobei das untere Ende der zweiten Abtriebswelle (17) drehbar in einer Hälfte des Gehäuses (3) gelagert ist und
g) dass eine auf das obere Ende der zweiten Abtriebswelle (17) aufsteckbare Lagerbrücke (25) vorhanden ist, welche die zweite Abtriebswelle (17) unmittelbar und/oder im Bereich eines Haltebunds des zweiten Antriebsritzels (21) drehbar lagert und welche gleichzeitig als Lager für das auf die Lagerbrücke aufsteckbare erste Antriebsritzel (37) und die damit drehfest verbundene erste Abtriebswelle (15) dient.

2. Messwerk nach Anspruch 1, **dadurch gekennzeichnet, dass** die zweite Abtriebswelle (17) mit ihrem Ende über das Ende der als Hohlwelle ausgebildeten ersten Abtriebswelle (15) hinausragt.

3. Messwerk nach Anspruch 1 oder 2, **dadurch gekennzeichnet, dass** der erste (7) und zweite (9) Antrieb im Wesentlichen identisch ausgebildet sind.

4. Messwerk nach einem der vorhergehenden Ansprüche, **dadurch gekennzeichnet, dass** der erste (7) und zweite (9) Antrieb spiegelbildlich im Gehäuse (3) angeordnet sind.

5. Messwerk nach einem der vorhergehenden Ansprüche, **dadurch gekennzeichnet, dass** das drehfest mit der ersten Abtriebswelle (15) verbundene Antriebsritzel (37) über ein erstes Zwischenritzel (28) mit dem ersten Antrieb (7) verbunden ist und dass das drehfest mit der zweiten Abtriebswelle (17) verbundene zweite Antriebsritzel (21) über ein zweites Zwischenritzel (29) mit dem zweiten Antrieb verbunden ist.

6. Messwerk nach einem der vorhergehenden Ansprüche, **dadurch gekennzeichnet, dass** die erste als Hohlwelle ausgebildete Abtriebswelle (15) einstückig mit dem ersten Antriebsritzel (37) ausgebildet ist.

7. Messwerk nach einem der vorhergehenden Ansprüche, **dadurch gekennzeichnet, dass** zwischen der Unterseite der Lagerbrücke (25) und der Oberseite des zweiten Antriebsritzels (21) eine federndes Element (40) zur axialen Fixierung des zweiten Antriebsritzels (21) vorhanden ist.

8. Messwerk nach Anspruch 5, **dadurch gekennzeichnet, dass** die Lagerbrücke (25) gleichzeitig als axiale Fixierung des im Gehäuse (3) drehbar gelagerten zweiten Zwischenritzels (29) dient.

9. Messwerk nach einem der vorhergehenden Ansprüche, **dadurch gekennzeichnet, dass** die Lagerbrücke (25) eine von der zweiten Abtriebswelle (17) durchgriffene Führungshülse (35) aufweist, welche als Lagerhülse für das erste Antriebsritzel (37) dient.

10. Messwerk nach Anspruch 9, **dadurch gekennzeichnet, dass** die Führungshülse (35) in die als Hohlwelle ausgebildete erste Abtriebswelle (15) eingreift.

11. Messwerk nach einem der vorhergehenden Ansprüche, **dadurch gekennzeichnet, dass** die erste Abtriebswelle (15) drehbar in der Gehäuseoberseite gelagert ist, wobei hierfür in der Gehäuseoberseite vorzugsweise ein Zentrierbund (38) ausgebildet ist, der gleichzeitig zur Fixierung des Messwerks (1) in einem Montageteil dient.

12. Messwerk nach einem der vorhergehenden Ansprüche, **dadurch gekennzeichnet, dass** erste (8) und zweite (10) Anschlusskontakte des ersten (7) und zweiten (9) Antriebs an der Gehäuseoberseite herausgeführt sind.

13. Messwerk nach einem der vorhergehenden Ansprüche, **dadurch gekennzeichnet, dass** am Gehäuse (3) vorzugsweise als Rastmittel ausgebildete erste Befestigungsmittel (41) vorhanden sind, welche zur Fixierung und Halterung des Messwerks (1) in oder an einem Montageteil mit an dem Montageteil vorhandenen, vorzugsweise als Gegenrastmittel ausgebildeten zweiten Befestigungsmitteln zusammenwirken.

## Claims

1. Measuring unit, in particular for display devices in motor vehicle equipment,
a) having a housing (3),
b) in which a first drive (7) and a second drive (9) which can be driven independently of one another are arranged, said drives (7, 9) being each connected to a first output shaft (15) and second output shaft (17) by means of first and second gear mechanisms, it being possible to connect said output shafts (15, 17) in each case to a display element,
c) the second output shaft (17) being guided coaxially through the first output shaft (15) which is embodied as a hollow shaft,
d) the first gear mechanism comprising a drive pinion (37) which is connected fixed in terms of rotation to the first output shaft (15) and which is connected to the first drive (7), and the second gear mechanism comprising a second drive pinion (21) which is connected axially and fixed in terms of rotation to the second output shaft (17) and is connected to the second drive,
**characterized**
e) in that the housing (3) is composed of an upper housing part (3b) and a lower housing part (3a),
f) the lower end of the second output shaft (17) being mounted so as to be capable of rotating in one half of the housing (3), and
g) in that there is a bearing bridge (25) which can be plugged onto the upper end of the second output shaft (17) and which rotatably supports the second output shaft (17) directly and/or in the region of a securing collar of the second drive pinion (21) and which serves simultaneously as a bearing for the first drive pinion (37) which can be plugged onto the bearing bridge and for the first output shaft (15) which is connected fixedly in terms of rotation thereto.

2. Measuring unit according to Claim 1, **characterized in that** the second output shaft (17) projects with its end beyond the end of the first output: shaft (15) which is embodied as a hollow shaft.

3. Measuring unit according to Claim 1 or 2, **characterized in that** the first drive (7) and second drive (9) are of an essentially identical construction.

4. Measuring unit according to one of the preceding claims, **characterized in that** the first drive (7) and the second drive (9) are arranged in the housing (3) in mirror-inverted fashion.

5. Measuring unit according to one of the preceding claims, **characterized in that** the drive pinion (37) which is connected fixedly in terms of rotation to the first output shaft (15) is connected to the first drive (7) via a first intermediate pinion (28), and **in that** the second drive pinion (21) which is connected fixedly in terms of rotation to the second output shaft (17) is connected to the second drive via a second intermediate pinion (29).

6. Measuring unit according to one of the preceding claims, **characterized in that** the first output shaft (15) which is embodied as a hollow shaft is constructed in one piece with the first drive pinion (37).

7. Measuring unit according to one of the preceding claims, **characterized in that** there is a sprung element (40) for axially securing the second drive pinion (21) between the underside of the bearing bridge (25) and the upper side of the second drive pinion (21).

8. Measuring unit according to Claim 5, **characterized in that** the bearing bridge (25) serves simultaneously as an axial securing means for the second intermediate pinion (29) which is rotatably mounted in the housing (3).

9. Measuring unit according to one of the preceding claims, **characterized in that** the bearing bridge (25) has a guide sleeve (35) through which the second output shaft (17) engages and which serves as a bearing sleeve for the first drive pinion (37).

10. Measuring unit according to Claim 9, **characterized in that** the guide sleeve (35) engages in the first output shaft (15) which is embodied as a hollow shaft.

11. Measuring unit according to one of the preceding claims, **characterized in that** the first output shaft (15) is rotatably mounted in the upper side of the housing, a centring collar (38), which serves simultaneously to secure the measuring unit (1) in a mounting part, being preferably constructed for this purpose in the upper side of the housing.

12. Measuring unit according to one of the preceding claims, **characterized in that** first connecting contacts (8) and second connecting contacts (10) of the first drive (7) and second drive (9) are led out at the upper side of the housing.

13. Measuring unit according to one of the preceding claims, **characterized in that** on the housing (3) there are first attachment means (41) which are preferably embodied as latching means and which interact with second attachment means, present on a mounting part and preferably embodied as mating latching means, in order to secure and hold the measuring unit (1) in or on the mounting part.

## Revendications

1. Mécanisme de mesure, en particulier pour des systèmes d'affichage en technique automobile,
a) comprenant un boîtier (3),
b) dans lequel sont agencés un premier entraînement (7) et un deuxième entraînement (9) susceptibles d'être pilotés indépendamment, lesquels sont respectivement reliés à un premier arbre mené (15) et à un deuxième arbre mené (17) au moyen d'une première et d'une deuxième transmission, lesdits arbres étant susceptibles d'être accouplés à un élément d'affichage respectif,
c) dans lesquels le deuxième arbre mené (17) est guidé coaxialement à travers le premier arbre mené (15) réalisé sous la forme d'un arbre creux,
d) dans lesquels la première transmission comprend un pignon d'entraînement (37) relié solidairement en rotation avec le premier arbre mené (15), ledit pignon étant relié au premier entraînement (7), et la deuxième transmission comprend un deuxième pignon d'entraînement (21) axial relié solidairement en rotation avec le deuxième arbre mené (17), ledit pignon étant relié au deuxième entraînement,
**caractérisé en ce que**
e) le boîtier (3) est constitué par une partie de boîtier supérieure (3b) et par une partie de boîtier inférieure (3a),
f) l'extrémité inférieure du deuxième arbre mené (17) est montée en rotation dans une moitié du boîtier (3), et
g) il est prévu un pontet de montage (25) susceptible d'être enfiché sur l'extrémité supérieure du deuxième arbre mené (17), qui assure le montage en rotation du deuxième arbre mené (17) directement et/ou dans la région d'une collerette de maintien du deuxième pignon d'entraînement (21) et qui sert simultanément de palier pour le premier pignon d'entraînement (37) susceptible d'être enfiché sur le pontet de montage et pour le premier arbre mené (15) relié solidairement en rotation avec celui-ci.

2. Mécanisme de mesure selon la revendication 1, **caractérisé en ce que** le deuxième arbre mené (17) dépasse avec son extrémité au-delà de l'extrémité du premier arbre mené (15) réalisé sous forme d'arbre creux.

3. Mécanisme de mesure selon l'une ou l'autre des revendications 1 et 2, **caractérisé en ce que** le premier entraînement (7) et le deuxième entraînement (9) sont réalisés essentiellement de façon identique.

4. Mécanisme de mesure selon l'une des revendications précédentes, **caractérisé en ce que** le premier entraînement (7) et le deuxième entraînement (9) sont agencés de façon symétrique dans le boîtier (3).

5. Mécanisme de mesure selon l'une des revendications précédentes, **caractérisé en ce que** le pignon d'entraînement (37) relié solidairement en rotation avec le premier arbre mené (15) est relié au premier entraînement (7) via un premier pignon intermédiaire (28), et **en ce que** le deuxième pignon d'entraînement (21) relié solidairement en rotation avec le deuxième arbre mené (17) est relié au deuxième entraînement via un deuxième pignon intermédiaire (29).

6. Mécanisme de mesure selon l'une des revendications précédentes, **caractérisé en ce que** le premier arbre mené (15) réalisé sous forme d'arbre creux est réalisé d'une seule pièce avec le premier pignon d'entraînement (37).

7. Mécanisme de mesure selon l'une des revendications précédentes, **caractérisé en ce qu'**un élément élastique (40) est prévu entre la face inférieure du pontet de montage (25) et la face supérieure du deuxième pignon d'entraînement (21) pour la fixation axiale du deuxième pignon d'entraînement (21).

8. Mécanisme de mesure selon la revendication 5, **caractérisé en ce que** le pontet de montage (25) sert simultanément de fixation axiale du deuxième pignon intermédiaire (29) monté en rotation dans le boîtier (3).

9. Mécanisme de mesure selon l'une des revendications précédentes, **caractérisé en ce que** le pontet de montage (25) comprend une douille de guidage (35) traversée par le deuxième arbre mené (17) et servant de douille de montage pour le premier pignon d'entraînement (37).

10. Mécanisme de mesure selon la revendication 9, **caractérisé en ce que** la douille de guidage (35) s'engage dans le premier arbre mené (15) réalisé sous forme d'arbre creux.

11. Mécanisme de mesure selon l'une des revendications précédentes, **caractérisé en ce que** le premier arbre mené (15) est monté avec faculté de rotation dans la face supérieure du boîtier, une collerette de centrage (38) étant de préférence réalisée à cet effet dans la face supérieure du boîtier, qui sert simultanément pour la fixation du mécanisme de mesure (1) dans une pièce de montage.

12. Mécanisme de mesure selon l'une des revendications précédentes, **caractérisé en ce que** des premiers (8) et des deuxièmes (10) contacts de raccordement du premier (7) et du deuxième (9) entraînement sont sortis au niveau de la face supérieure du boîtier.

13. Mécanisme de mesure selon l'une des revendications précédentes, **caractérisé en ce que** des premiers moyens de fixation (41), de préférence réalisés sous forme de moyens à enclenchement, sont prévus sur le boîtier (3), ces moyens coopérant, pour la fixation et le maintien du mécanisme de mesure (1) dans ou sur une partie de montage, avec des seconds moyens de fixation prévus sur la partie de montage et réalisés de préférence sous la forme de moyens à enclenchement antagonistes.
